# EUROPEAN PATENT APPLICATION

(11) **EP 3 848 287 A1**
(43) Date of publication of application: **14.07.2021**
(21) Application number: 20275002.2
(22) Date of filing: 07.01.2020
(51) Int. Cl.: B64D 27/24

(54) **ELECTRIC PROPULSION SYSTEM**

(71) Applicant: Hamilton Sundstrand Corporation, Charlotte, NC 28217-4578 (US)
(72) Inventor: BALACHANDRAN, Ajith, Dickens Heath B90 1SE (GB); MENON, Kalyani Govindankutty, Dickens Heath B90 1SE (GB)
(74) Representative: Dehns

(57) **Abstract**

An electric propulsion system (16) for an aircraft (10) comprises a plurality of propulsion modules (16). Each propulsion module (16) comprises a motor (22), an energy store (30) configured to supply electrical energy to the motor (22), and a controller (50) configured to control the motor (22) and the energy store (30). Each propulsion module (16) is configured such that the motor (22) of the propulsion module (16) receives electrical energy only from the energy store (30) of the propulsion module (16).

## Description

The present disclosure relates to an electric propulsion system for an aircraft.

Full electric propulsion systems for aircraft commonly comprise multiple propellers which are each driven by a respective electric motor, and an energy store such as a battery bank or fuel cell. Electrical energy is provided to each of the motors via an AC or DC distribution network.

DC distribution network architectures are favorable for full electric aircraft propulsion systems as they reduce the need for many power conversion stages. However, DC distribution networks require large feeder cables and protection systems which add to the weight of the system. Common DC distribution networks can also suffer from single point failure. This has led to redundant or fault tolerant system designs, which add further to the system weight and complexity.

The Applicant believes that there remains scope for improvements to aircraft propulsion systems.

The present invention provides an electric propulsion system for an aircraft comprising:
a plurality of propulsion modules, each propulsion module comprising a motor, an energy store configured to supply electrical energy to the motor, and a controller configured to control the motor and the energy store;
wherein each propulsion module is configured such that the motor of the propulsion module receives electrical energy only from the energy store of the propulsion module.

The present invention also provides a propulsion module for an electric propulsion system, comprising a motor; an energy store configured to supply electrical energy to the motor; and a controller configured to control the motor and the energy store.

Configuring the electric propulsion system so as to comprise plural modules where each motor receives electrical energy only from the energy store of the same module eliminates the need for a DC distribution network (that would distribute electrical energy from a battery bank to plural motors) and consequently reduces the need for feeder cables, thereby advantageously reducing the total weight of the propulsion system.

This also improves the EMI (electromagnetic interference) and EMC (electromagnetic compliance) properties of the system, since each module is in effect electrically self-contained, so that the number of external interfaces can be reduced (e.g. since each module does not require an external power interface).

Configuring the electric propulsion system to comprise plural modules also provides a fault tolerant architecture, without the need for additional protection systems, weight or complexity. This is because each motor of the plurality of motors is independently powered by a respective energy store, and so a fault within one module will not affect the functioning of another module.

The modular architecture is also flexible and scalable, as additional modules can be straightforwardly added to the propulsion system when additional propulsive power is required.

The Applicant has also recognized that providing each module with a controller that controls both the motor and the energy store provides a number of advantages. In this regard, the Applicant has recognized that the functions of controlling the motor and controlling the energy store are similar and overlap in some respects. Providing each module with a single controller that controls both the motor and the energy store has been found to reduce the complexity of the system, thereby improving its safety, simplifying the compliance process, and reducing its cost. Providing each module with a single controller that controls both the motor and the energy store also reduces the number of interconnections required and allows the system to perform faster, e.g. by performing protection functions faster.

It will be appreciated, therefore, that the present disclosure provides an improved electric propulsion system.

Each motor may comprise any suitable electric motor for driving a (single) propeller or fan of the propulsion system, such as an altitude motor. Correspondingly, each propulsion module may further comprise a (single) propeller or a fan (such as a ducted fan) connected to (and driven by) the motor.

Each propulsion module may be configured such that the propeller or fan of the propulsion module is driven only by the motor of the propulsion module. Thus, the propulsion system may be a full electric propulsion system.

Each energy store may comprise one or more batteries such as one or more rechargeable batteries.

In various particular embodiments, each energy store (each battery) is removably attachable to (is removable from) the module. Each energy store (each battery) may be configured such that it can be recharged when removed from the module. Thus, in various embodiments, each module comprises one or more rechargeable batteries which are each removably attachable to (removable from) the module.

The use of removable rechargeable batteries means that the propulsion system need not comprise a charging network. In other words, the propulsion system itself need not include the components necessary to allow recharging of the energy stores (batteries). These components can instead be (and in embodiments are) provided as part of a ground-based charging system. This further advantageously reduces the weight of the propulsion system.

In these embodiments, the energy stores (batteries) can be removed from the propulsion system and recharged using the ground-based charging system. Pre-charged energy stores (batteries) can be used to replace the removed energy stores (batteries). The energy stores (batteries) can be removed from the propulsion system replaced while the aircraft is on the ground. This can advantageously reduce the turnaround time of the aircraft.

Each propulsion module may comprise a power converter, such as an inverter, configured to convert DC electrical power from the energy store to AC power required by the motor. Thus, each energy store may be configured to supply electrical energy to the motor via a power converter (and each propulsion module may be configured such that the motor of the propulsion module receives electrical energy only from the energy store of the propulsion module via the power converter). Each power converter may be configured to control the (amplitude and/or frequency of the) electrical energy supplied to the motor.

Each controller may be configured to control its respective motor in any suitable manner. Each controller may be configured to control (at least) the motor's speed and/or torque. The controller may control its motor by controlling the (amplitude and/or frequency of the) electrical energy supplied to the motor (e.g. in the manner of a motor drive). The controller may control its motor by controlling the power converter. Each controller may be configured to control its respective motor in response to one or more inputs, e.g. from a master controller.

Each controller may be configured to control the energy store in any suitable manner. Each controller may be configured to control the energy store so as to protect the energy store from operating outside its safe operating area and/or to balance the energy store. The controller may control its energy store in the manner of battery management unit (BMU). Each controller may be configured to control its respective energy store in response to one or more inputs, e.g. from a master controller and/or from sensors of the energy store.

The controller may comprise or may form part of an integrated motor drive and battery management unit (BMU).

Each propulsion module is configured such that the motor of the propulsion module receives electrical energy only from the energy store of the (same) propulsion module (and not from any of the other energy stores). Correspondingly, each energy store may be configured such that it provides electrical energy only to the motor of the (same) propulsion module (and not to any of the other motors). In other words, each motor's electrical power is isolated from each other motor's electrical power. That is, each energy store (battery) is dedicated to a single motor, namely the motor of that energy store's module.

As described above, this eliminates the need for a DC distribution network, improves the EMI and EMC properties of the system, and provides a fault tolerant, flexible and scalable architecture.

Each propulsion module may be configured as an integrated unit. Thus, each propulsion module may comprise a housing, wherein the motor, energy store, and the controller are housed in the housing.

The motor and/or the energy store (battery) may each have an approximately cylindrical shape. The motor may have a central axis (e.g. the axis of the motor's rotor), which may define an axial direction. The energy store (battery) may be mounted adjacent to the motor, such as axially behind the motor (that is, on the side of the motor opposite to the side of the motor at which the propeller (or fan) is located). The energy store (battery) may be mounted co-axially adjacent to the motor. The motor may have a first outer diameter (in a radial direction that is orthogonal to the axial direction), and the energy store (battery) may have a second outer diameter that is approximately equal to the first outer diameter.

The propulsion system may comprise any (plural) number of propulsion modules, such as two or more, three or more, five or more, ten or more, fifteen or more, twenty or more, thirty or more, or fifty or more propulsion modules.

The propulsion system may further comprise a master controller configured to control each propulsion module. The master controller may receive as its input(s) one or more flight control commands, and/or one or more outputs from one or more sensors of the propulsion system or aircraft (such as on or more outputs of one or more position sensors, orientation sensors, speed sensors, etc.). The master controller may determine, based on its one or more inputs, one or more desired operating parameters for each propulsion module (such as a desired propulsion power, motor speed, motor torque, etc.). The master controller may be configured to control each propulsion module by controlling the propulsion power, motor speed, motor torque, etc. of the propulsion module.

In various embodiments, the master controller is connected to each propulsion module by a communication network. The communication network may carry control signals only (and will therefore weigh significantly less than a DC power distribution network).

The propulsion system may further comprise a cooling system. The cooling system may be configured to provide coolant to each propulsion module. The cooling system may be connected to each propulsion module by one or more quick sealing couplings. This can advantageously reduce the turnaround time of the aircraft.

In various embodiments the only inter-module connections are for the control signals and the coolant. This advantageously reduces the complexity of the overall system.

The present invention also provides an aircraft comprising an airframe and the electric propulsion system described above.

The present invention also provides a system comprising the aircraft described above and a ground-based charging system. The system may be configured such that each energy store of the electric propulsion system can be removed from its propulsion module and charged by the ground-based charging system.

The present invention also provides a method of propelling an aircraft, the method comprising using the electric propulsion system described above to propel an aircraft.

The method may comprise removing one or more of the energy stores (batteries) from the propulsion system and recharging the removed energy store(s) using a ground-based charging system.

The method may comprise replacing the one or more removed energy stores (batteries) with one or more pre-charged energy stores (batteries).

Certain preferred embodiments of the present disclosure will now be described in greater detail, by way of example only and with reference to the following figures, in which:
Figure 1 shows schematically an aircraft that may be propelled by the electric propulsion system of various embodiments;
Figure 2 shows schematically a known electric propulsion system for an aircraft;
Figure 3 shows schematically an electric propulsion system for an aircraft in accordance with various embodiments;
Figure 4 shows schematically a ground-based battery charging system in accordance with various embodiments;
Figure 5 shows schematically detail of a propulsion module for an electric propulsion system in accordance with various embodiments; and
Figure 6 shows schematically a propulsion module for an electric propulsion system in accordance with various embodiments.

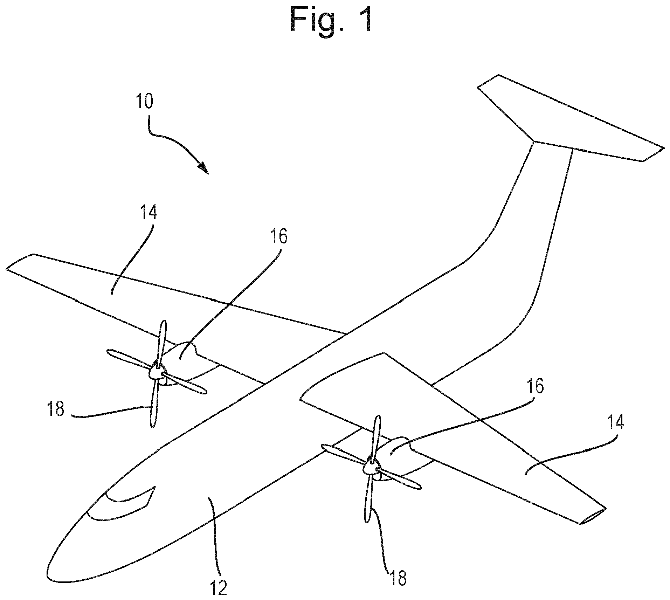

Figure 1 shows schematically an aircraft 10 which may comprise the electric propulsion system of various embodiments. As shown in Figure 1, the aircraft may comprise a fuselage 12, wings 14, as well as an electric propulsion system 16 comprising a plurality of propellers 18. Electric propulsion systems are advantageous as they do not require expensive and polluting fuels.

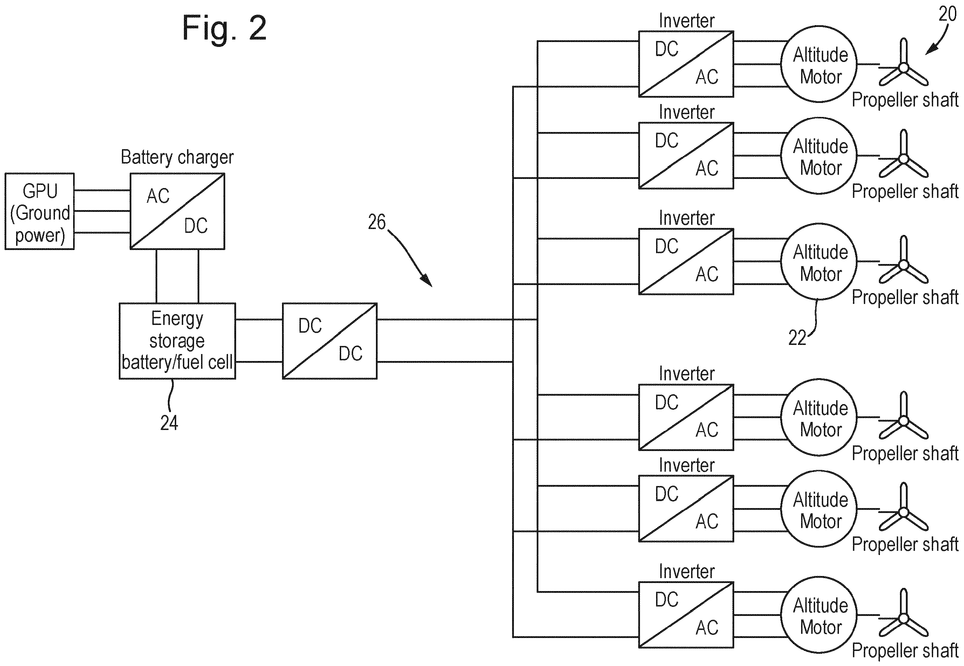

Figure 2 shows schematically a known full electric propulsion system. As shown in Figure 2, the electric propulsion system comprises multiple propellers 20 which are each driven by a respective electric motor 22. Electrical energy is provided to each of the motors 22 from an energy store 24 such as a battery bank or fuel cell via a DC distribution network 26.

DC network architectures are favourable for full electric aircraft propulsion systems as they reduce the need for many power conversion stages. However, DC distribution networks require large feeder cables and protection systems which add to the weight of the system. Common DC distribution networks can also suffer from single point failure. This has led to redundant or fault tolerant system designs, which add further to the system weight and complexity.

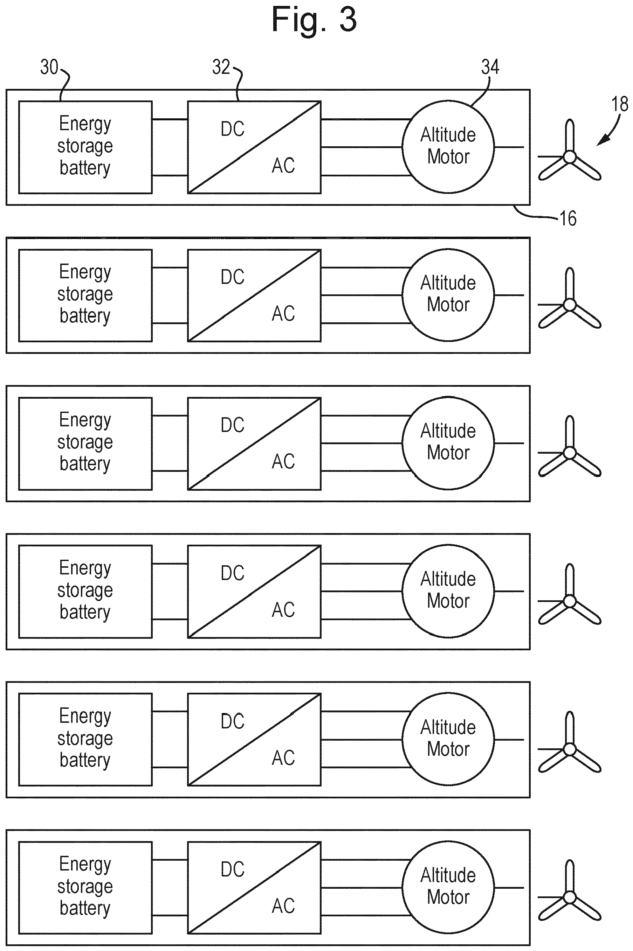

Figure 3 shows schematically a full electric propulsion system in accordance with various embodiments. As shown in Figure 3, the electric propulsion system comprises multiple propulsion modules 16.

Each propulsion module 16 comprises an energy storage device 30, which in this example is illustrated as a battery. However, more generally, the energy storage device could be any suitable device capable of storing energy.

Each energy storage device 30 may be connected to a DC/AC inverter 32. Each DC/AC inverter 32 may be connected to a motor 34, which is illustrated as an altitude motor in this example. However, more generally each motor could be any suitable electric motor.

Each motor 34 may be configured to receive electrical energy from its respective DC/AC inverter 32, which may in turn be configured to receive electrical energy from its respective energy storage device 30. The DC/AC inverter may be configured to convert the DC power from the energy storage device to AC power, as required by the motor 34.

Each motor 34 of each module 16 may be connected to and may be configured to drive a propeller 18, which may provide means of propulsion for the aircraft 10. It would also or instead be possible for one or more or each motor 34 to be connected to and drive a fan, such as a ducted fan, which may provide means of propulsion for the aircraft 10.

It will be appreciated that the modular electric propulsion system illustrated in Figure 3, advantageously saves weight and reduces the complexity of systems needed on-board the aircraft 10. The requirement of relatively heavy feeder cables is removed and/or reduced, due to the close integration of the energy storage device 30 with the DC/AC inverter 32 and the electric motor 34.

This also improves the EMI (electromagnetic interference) and EMC (electromagnetic compliance) properties of the system, since DC feeder cables are commonly a source of and/or are susceptible to EMI. The EMI and EMC properties of the system are also improved since each module 16 is in effect electrically self-contained, so that the number of external interfaces can be reduced (e.g. since each module 16 does not require an external power interface).

Configuring the electric propulsion system to comprise plural modules also provides a fault tolerant architecture, without the need for additional protection systems, weight or complexity. This is because each motor of the plurality of motors is independently powered by a respective energy store, and so a fault within one module will not affect the functioning of another module.

The modular architecture is also flexible and scalable, as additional modules can be straightforwardly added to the propulsion system when additional propulsive power is required.

In various embodiments, each energy storage device 30 may comprise one or more batteries, such as one or more rechargeable batteries. Each energy storage device 30 (each battery) may be detachable from its propulsion module 16. Each energy storage device 30 (each battery) can be configured such that it can be charged when removed from its module 16. This advantageously means that the propulsion system does not require a charging network to be located on-board of the aircraft 10, thereby reducing weight.

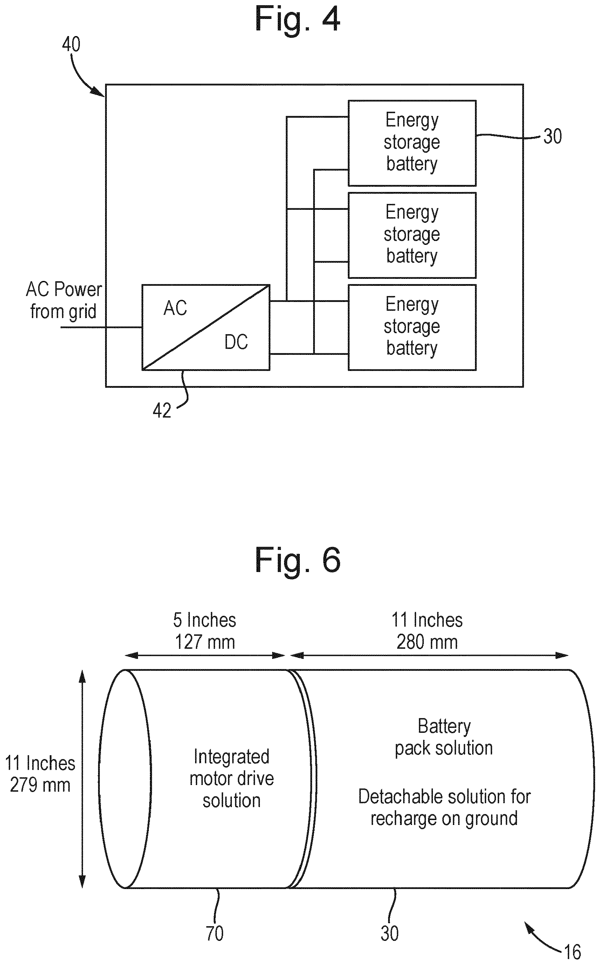

Figure 4 shows schematically a ground-based battery charging system 40 in accordance with various embodiments.

One or more energy storage devices 30 may be connected in parallel to an AC/DC converter 42. The AC/DC converter 42 may receive electrical energy, for example in the form of AC power from an electrical grid, and may convert the AC power to DC power as required by the energy storage devices 30. In this way, electrical energy from the grid may be used to charge the one or more energy storage devices 30 when connected to the ground-based charging system 40.

In various embodiments, each energy storage device 30 (each battery) of the electric propulsion system can be removed from its module 16, and may be recharged using the ground-based charging system 40.

Each energy storage device 30 (battery), when charged may be detached from the ground-based charging network 40, and used to replace a depleted electrical storage device 30 (battery) of the electric propulsion system. The depleted electric storage device 30 (battery) may then be re-charged using the ground-based battery charging system 40.

It will be accordingly be appreciated that each energy storage device 30 (each battery) of the propulsion system can readily be replaced with a pre-charged energy storage device 30 (battery) while the aircraft is on the ground 10. Since such swapping can be done quickly, i.e. in less time than the normal turnaround cycle of an aircraft, this may advantageously reduce the turnaround time of the aircraft 10.

These embodiments enable the weight of the propulsion system to be further reduced by removing the necessity of an on-board charging network, as the energy storage devices 30 can be configured to be detached from the electric propulsion system and either recharged at a ground station 40, and/or immediately replaced with other pre-charged energy storage devices 30.

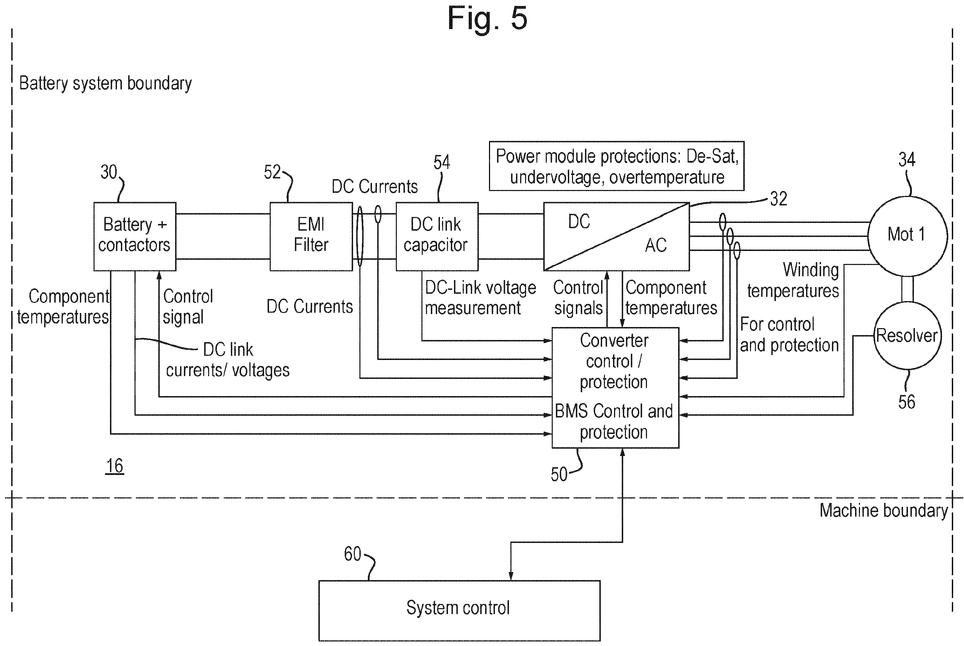

Figure 5 shows schematically in detail a propulsion module 16 in accordance with various embodiments.

As shown in Figure 5, each propulsion module 16 comprises a controller 50 which may be configured to act as both a battery management unit (BMU) and motor controller (motor drive). In other words, the BMU functionality is integrated with the inverter in order to manage discharge of the energy storage device(s) (battery(ies)). This is in contrast to known arrangements, whereby the battery management unit (BMU) and motor controller (motor drive) functions are provided as separate and distinct controllers.

As shown in Figure 5, in embodiments, the controller 50 receives a number of input signals from various components of the propulsion module 16, and sends control signals to the energy storage device 30 (battery) and to the inverter 32. The controller 50 is configured to provide both control and protection for the inverter 32 and control and protection for the energy storage device 30 (battery).

The provision of an integrated battery management unit (BMU) and motor controller (motor drive) provides a number of advantages including faster protection response times, a reduced number of interconnects, and a reduced number of communication interfaces. This also reduces the complexity of the system, thereby improving its safety, simplifying the compliance process, and reducing its cost.

As shown in Figure 5, the controller 50 may be configured to control the energy storage device 30 (battery) by acting as a battery management unit (BMU) by monitoring one or more temperatures, currents and/or voltages of the energy storage device 30 (battery), and by providing control signals to the energy storage device 30 (battery).

For example, the controller 50 may be configured to control the energy storage device 30 (battery) by acting as a battery management unit (BMU) by monitoring its state, calculating secondary data, reporting that data, controlling its environment for example by use of a cooling system, authenticating it and/or balancing it, and so on.

The controller 50 may be configured to monitor the state of the energy storage device 30, for example by monitoring total voltage, voltage of individual cells, minimum and maximum cell voltage, average temperature, coolant intake temperature, coolant output temperature, temperature of individual cells, state of charge (SOC), depth of charge (DOC) (so as to indicate the level of the battery), state of health (SOH) (so as to measure the remaining capacity of the battery as a percentage of the original capacity), state of power (SOP) (so as to determine the amount of power available for a defined time interval given the current power usage), temperature, state of safety (SOS), coolant flow, current in and/or out of the energy storage device 30, and so on.

The controller 50 may be configured to act as a battery management unit by providing thermal management capabilities. Thermal management capabilities may include controlling passive and/or active cooling systems.

The controller 50 may be configured to act as a battery management unit by calculating one or more values based on any of the above items, which may include for example, maximum charge current as a charge current limit (CCL), maximum discharge current as a discharge current limit (DCL), energy delivered during the current cycle, internal impedance of a cell, charge delivered or stored (i.e. coulomb counter), total energy delivered since first use, total operating time since first use, total number of cycles, and the like.

The controller 50 may be configured to act as a battery management unit by providing a means of communication internally with its hardware, and/or externally with high level hardware such as a laptop, terminal, human machine interface and the like. Communication may be achieved by both wired and isolated means, and/or by wireless means.

The controller 50 may be configured to act as a battery management unit by providing protection to the energy storage device 30, for example by preventing it from operating outside of its safe operating area, including over-current, overvoltage, under-voltage, over-temperature, under temperature, over-pressure, ground fault, leakage current detection, and the like. The controller may be configured to prevent any one of the above from occurring by, for example, any one of operating an internal switch if the energy storage device 30 is operated outside its safe operating area, requesting the device(s) to which the battery is connected (e.g. the motor) to reduce or terminate the use of the battery, and/or by actively controlling the environment by use of a cooling system, and so on.

The controller 50 may be configured to act as a battery management unit by optimising the performance of the energy storage device 30, for example by maximising the energy storage device 30 capacity, preventing localized undercharging and/or over-charging, ensuring that all the cells that form the energy storage device 30 are kept at the same voltage and/or state of charge, balancing, and the like. Balancing may be achieved, for example by wasting energy from the most charged cells by connecting them to a load, by shuffling energy from the most charged cell to the least charged cells, and the like.

As described above, the controller 50 may be configured to simultaneously act as a motor-drive in conjunction with acting as a battery management unit.

The controller 50 may be configured to control the performance of the motor 34, for example by providing means of manual or automatic starting and stopping, selecting forward or reverse rotation, selecting and regulating speed, regulating or limiting the torque, protecting against overloads and faults, and the like.

This may be done, for example, by controlling the frequency and/or amplitude, etc., of the electrical energy provided to the motor 34. This may be done by controlling the inverter 32.

As shown in Figure 5, the controller 50 may be configured to control the performance of the motor 34 by monitoring one or more temperatures, currents and/or voltages of the inverter 32 and/or of an EMI filter 52 and/or DC link capacitor 54 of the module 16, and/or by monitoring one or more temperatures, currents and/or voltages of the motor 34 and/or an associated resolver 56, and by providing control signals to the inverter 32.

As also shown in Figure 5, a master controller 60 may be configured to control each propulsion module 16 by receiving as one of its inputs one or more flight control commands, and/or one or more outputs from one or more sensors of the propulsion system or aircraft. The sensors may include but not limited to position sensors, orientation sensors, speed sensors and the like.

The master controller 60 may be configured to control each controller 50 of each propulsion module 16, thereby controlling the propulsion power, motor speed, motor torque or any other variable controlled by each propulsion module's controller 50 described above.

The master controller 60 may be connected to each propulsion module 16 by a communication network. The communication network may carry control signals only (and will therefore weigh significantly less than a DC power distribution network).

As shown in Figure 5, the master controller 60 may be connected to each propulsion module controller 50 by a single communications interface. Thus, in contrast with known arrangements in which a master controller must independently communicate with a battery management unit (BMU) and a motor controller (motor drive), in embodiments only a single communications interface is required to control both the battery management unit (BMU) and motor controller (motor drive) functions of the module 16.

The propulsion system may be configured to provide coolant to each propulsion module 16. The cooling system may be connected to each propulsion module 16 by one or more quick sealing couplings.

Thus, the only inter-module connections are for the control signals and the coolant. This advantageously reduces the complexity of the overall system.

Figure 6 shows schematically a propulsion module 16 in accordance with various embodiments. As shown in Figure 6, the propulsion module 16 may comprise an integrated motor and motor controller (motor drive) assembly 70, which may be integrated with the energy storage device 30 (battery pack), e.g. within an external housing.

The integrated motor and motor controller (motor drive) assembly 70 may have an approximately cylindrical shape. The energy store (battery) 30 may be mounted axially behind the motor and motor controller (motor drive) assembly 70 (that is, on the side of the motor opposite to the side of the motor at which the propeller (or fan) is located). The energy store (battery) 30 may be mounted co-axially adjacent to the motor and motor controller (motor drive) assembly 70, and may be configured to have an outer diameter approximately equal to the outer diameter of the motor and motor controller (motor drive) assembly 70.

This maximizes the volume available for the energy store (battery) 30, while providing a propulsion module 16 having a particularly convenient size and shape. In particular, it has been shown that a propulsion module 16 can be provided which has an approximately cylindrical shape, a length of around 400 mm, and an outer diameter of around 300 mm.

Detailed feasibility calculations, taking into account (amongst other things) the weight, size and energy density of current rechargeable batteries, as well as the power rating and size of current electrical motors, have shown that various embodiments are suitable for propelling an aircraft.

It will be appreciated from the above that various embodiments are directed to an integrated motor drive and battery assembly for full electric propulsion. Embodiments provide a full electrical aircraft propulsion system architecture which can reduce system weight by modularising components.

The motor drive and battery system are integrated such that each integrated module 16 is isolated from the other. In addition, the charging network is removed from the airframe, and battery swap technology is used to optimise system weight. The architecture also provides fault isolation between the modules 16 as the DC link networks are no longer interconnected to each other.

As described above, various embodiments provide a number of advantages, including (i) considerably reduced turnaround time; (ii) considerably reduced power feeder cabling leading to reduced system weight; (iii) the necessity of only control signal routing and cooling system connections, leading to simplified inter-system connections; (iv) the integration of the BMU functionality with the inverter, so as to improve management of discharge functionality; (v) better EMI/EMC compliance; and (vi) a fault tolerant architecture due to the DC power sources not being interconnected.

## Claims

1. An electric propulsion system for an aircraft comprising:
a plurality of propulsion modules, each propulsion module comprising a motor, an energy store configured to supply electrical energy to the motor, and a controller configured to control the motor and the energy store;
wherein each propulsion module is configured such that the motor of the propulsion module receives electrical energy only from the energy store of the propulsion module.

2. The electric propulsion system of claim 1, wherein each propulsion module comprises a propeller or a fan connected to the motor.

3. The electric propulsion system of claim 2, wherein each propulsion module is configured such that the propeller or fan is driven only by the motor of the propulsion module.

4. The electric propulsion system of claim 1, 2 or 3, wherein each energy store is configured such that it provides electrical energy only to the motor of the propulsion module

5. The electric propulsion system of any one of the preceding claims, wherein each energy store comprises one or more rechargeable batteries.

6. The electric propulsion system of any one of the preceding claims, wherein each energy store is removably attachable to the module.

7. The electric propulsion system of any one of the preceding claims, wherein each propulsion module comprises a power converter configured to convert electrical power from the energy store to electrical power required by the motor, and wherein each controller is configured to control the motor by controlling the power converter.

8. The electric propulsion system of any one of the preceding claims, wherein each controller is configured to control the speed and/or torque of the motor.

9. The electric propulsion system of any one of the preceding claims, wherein each controller is configured to control the energy store so as to protect the energy store from operating outside its safe operating area and/or to balance the energy store.

10. An aircraft comprising an airframe and the electric propulsion system of any one of the preceding claims.

11. A system comprising the aircraft of claim 10 and a ground-based charging system, wherein the system is configured such that each energy store of the electric propulsion system can be removed from its propulsion module and charged by the ground-based charging system.

12. A propulsion module for an electric propulsion system, comprising:
a motor;
an energy store configured to supply electrical energy to the motor; and
a controller configured to control the motor and the energy store.

13. A method of propelling an aircraft, the method comprising using the electric propulsion system of any one of claims 1 to 9 to propel an aircraft.

14. The method of claim 13, further comprising removing one or more of the energy stores from the propulsion system and recharging the removed energy store(s) using a ground-based charging system.

15. The method of claim 13 or 14, further comprising replacing the one or more removed energy stores with one or more pre-charged energy stores.
